# EUROPEAN PATENT SPECIFICATION

(11) **EP 1 331 179 B1**
(45) Date of publication and mention of the grant of the patent: **20.10.2004**
(21) Application number: 02425036.7
(22) Date of filing: 29.01.2002
(51) Int. Cl.: B65G 1/04, B65G 1/137

(54) **System and method for commissioning goods**
Vorrichtung und Verfahren zur Kommissionierung von Waren
Dispositif et méthode pour composer un ensemble de merchandises

(43) Date of publication of application: 30.07.2003
(73) Proprietor: SWISSLOG ITALIA S.p.A., 20128 Milano (IT)
(72) Inventor: Davolio, Maurizio., I-41058 Vignola(MO) (IT); Cauro, Luigi, 20131 Milano (MI) (IT); Vercesi, Paolo., I-27100 Pavia (PV) (IT)
(74) Representative: Provvisionato, Paolo

(56) References cited:
- EP-A- 0 860 382
- DE-A- 4 306 469
- US-A- 4 909 697

## Description

The present invention relates to the field of plant for commissioning goods disposed in containers and in particular, but in non-limiting manner, to a system for commissioning goods and to a method of operating the system.

Many systems are known for commissioning goods and, in particular, goods disposed in containers which are kept in a warehouse or storage area. Generally, the warehouse containers are transferred by transfer means from the warehouse area towards distribution means and from there towards a commissioning area. Generally, the distribution means comprise one or more conveyor belts and the commissioning area comprises a plurality of work stations. In each work station, the goods are picked from the warehouse containers and inserted in further containers in order to fulfil a predetermined order. Once the latter containers have been filled, they are removed from the commissioning area to a subsequent operative area, for example, a despatch area. Similarly, the warehouse containers which have been completely or partially emptied during the picking operation are removed from the commissioning area and transferred back towards the warehouse area, by means of the conveyor belts, to await refilling or a subsequent order.

Generally, in order to fulfil a single order, it is necessary to pick goods that are different from one another and it is consequently necessary to transfer a plurality of containers from the warehouse towards the work stations. In order to optimize such an operation, the system must be able to organize the correct sequences for the transfer of several containers from the warehouse area towards the distribution means and subsequently towards the work stations.

Various solutions are known for improving the performance of these systems by organizing the sequence in which several containers arrive at each individual work station.

For example, Witron Logistik & Informatik GmbH's document EP 0 860 382 describes a system for commissioning goods comprising a warehouse for storing containers, a system of conveyor belts for transferring the containers out of the warehouse, a plurality of work stations, and a distribution system disposed between the work stations and the warehouse. In addition, the system comprises a device which can temporarily store the containers arriving from the distribution system and release them towards the work station in accordance with a predetermined sequence. This solution reduces the complexity of the control of the sequences for the transfer of the containers from the warehouse towards the distribution system, reduces the space occupied by the containers arriving at each work station by putting them to wait in the storage device, and enables the containers to be arranged in sequence on the basis of the order to be fulfilled, in order to optimize picking times.

One of the main disadvantages of the system described in the document EP 0 860 382 consists of the need to fulfil each order entirely with a single sequence of containers. For example, if a first container coming from the warehouse contains a number of articles such as to be able to fulfil two or more orders but is inserted in a sequence of further containers containing a number of articles sufficient for a single order, the first container will have to be sent back to the distribution system before it can be used again to fulfil a further order. This limitation, which is particularly marked in cases in which the order can be satisfied solely by goods contained in a plurality of different containers, renders the management of the distribution means disposed upstream of the work stations very complex and causes a large increase in the times required to fulfil each individual order.

Another disadvantage of the system described in the document EP 0 860 382 is constituted by the need, at any particular time, to complete each individual order before being able to start a new one. A container which has not yet been filled sufficiently to fulfil an order in fact necessarily has to return to the distribution means to await redistribution to the work station. All of this complicates both the management logistics and the work load of the distribution means.

The object of the present invention is to provide a system and a method for commissioning goods which can overcome the disadvantages connected with the prior art and, in particular, which can perform many different operations in order to fulfil an order for goods, offering the capability to move both the warehouse containers and the commissioning containers without, however, occupying the distribution means and/or the warehouse area.

A further object of the present invention is to provide a system for commissioning goods which enables times and spaces to be optimized, which is easy to construct and to maintain, and which is very reliable over time.

To achieve the objects specified above, the subject of the present invention is a system and a method for commissioning goods comprising the characteristics indicated in the appended claims.

During the operation of the commissioning system, one or more commissioning items are transferred selectively from the delivery transport means to the transfer means or *vice versa,* and from the return transport means to the transfer means or *vice versa.*

According to a characteristic of the present invention, the system for commissioning goods comprises container-storage structures operatively associated with the means for moving containers disposed in the vicinity of each work station.

An advantage of the present invention is constituted by the fact that it is possible to perform operations for the picking of goods with storage. Since each warehouse comprises articles which may be used more frequently than others, the containers of these articles can be kept in the storage structures of the present invention. Each time it is necessary, in the work station, to fulfil an order comprising, amongst other things, one of the above-mentioned frequently used articles, the respective container is transferred from the storage structures and delivered to the work station and then, upon completion of the picking operation, is sent back to the storage structures. It is thus not necessary to occupy the distribution means and/or the warehouse area further. The container of frequently used articles will leave the commissioning area only when it is completely empty. In this case, the container will return to the warehouse area, will be filled again, and will then return to the storage structures.

Another advantage of the present invention is that it is possible to perform partial picking operations. In normal working conditions, for example, in the absence of orders to be fulfilled urgently, it is possible to start the picking of one or more articles and the filling of one or more containers. When an urgent order arrives, the partially filled containers and the respective containers of warehouse goods can be stored temporarily in the storage structures so as to leave the system free. Once the urgent order has been completed, a new order may be sent to the work station, or the warehouse containers and the respective partially filled commissioning containers may be sent back so that the previously interrupted picking operations can be completed.

Further advantages of the present invention are constituted by the capability to perform operations to consolidate or group various orders relating to the same customer and/or operations to optimize despatches on the basis of the geographical destinations of the containers. If a customer is authorized to send a plurality of orders to the system within a predetermined period of time, possibly of several days, it is possible to fulfil the individual orders arriving from that customer from time to time, even before the end of the period of time allotted to the customer, and to hold one or more containers containing the goods relating to these individual orders temporarily in the storage structures. As the system receives new orders for the same customer one by one, these can be fulfilled in the same work station as the orders previously fulfilled and the containers used for the previous orders from the same customer can be filled further with the goods relating to the subsequent orders. When the said period of time has elapsed, one or more containers containing the goods relating to the orders fulfilled up to that time for that particular customer, all of which are therefore kept in the same storage structures, are sent to the despatch area.

Further characteristics and advantages of the invention will become clear from the following detailed description given with reference to the appended drawings, provided purely by way of non-limiting example, in which:
Figure 1 and Figure 2 are two schematic and partial plan views of systems of known type for commissioning goods,
Figure 3 is a schematic and partial plan view of a plant for commissioning goods according to the present invention,
Figure 4 is a schematic and partial plan view of a system for commissioning goods according to the present invention,
Figure 5 is a schematic side view of the transfer and storage means of the present invention,
Figure 6 is a schematic front view of the transfer and storage means of the present invention,
Figure 7 is a flow chart which shows the main steps of a known method for a system for commissioning goods, and
Figure 8 is a flow chart which shows the main steps of a method for the system for commissioning goods of the present invention.

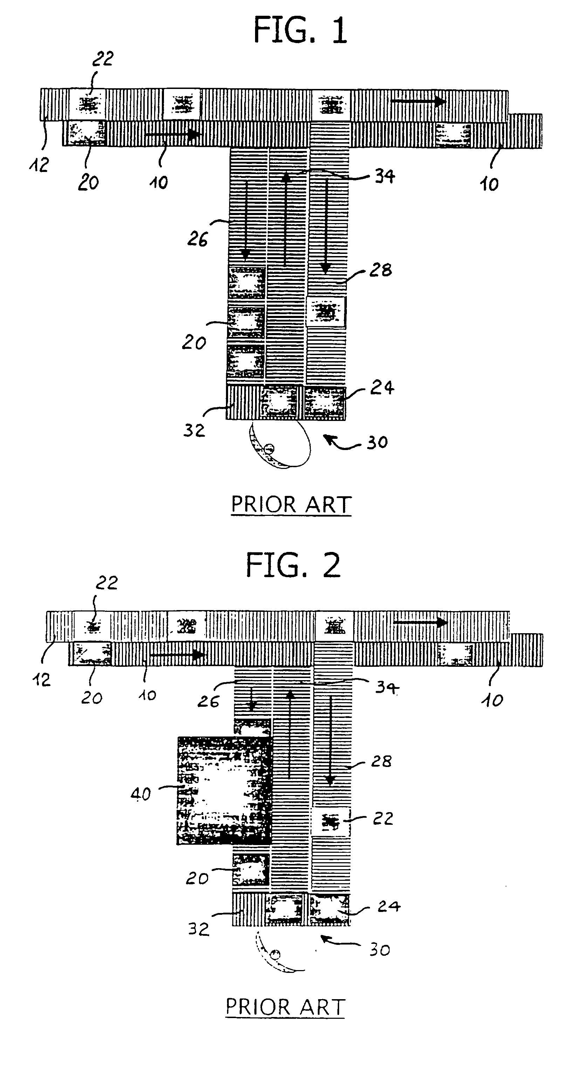

In order to explain more clearly the innovations of the present invention in comparison with the prior art, Figures 1 and 2 show a known commissioning system which comprises a pair of conveyor belts 10 and 12 for transferring commissioning items coming from a warehouse area to a picking station 30, respectively.

The term " commissioning items" is intended to define generically herein the items used to fulfil an order which come from a warehouse, for example, individual articles, or containers containing a plurality of articles. For convenience of explanation, the commissioning items constituted by containers containing goods coming from a warehouse will be referred to below as warehouse containers 20.

In the known examples of Figures 1 and 2, the warehouse containers 20 are made available in succession, by means of delivery channels 26, 28, to a picking table 32 of the picking station 30, in order for the goods contained in the warehouse containers 20 to be removed and deposited in an empty container 22, so as to fulfil a predetermined order. The warehouse containers 20 which have been completely or partially emptied during the picking operation and the containers filled with goods relating to a predetermined order which, for convenience of explanation, will be referred to below as commissioning containers, are moved away from the picking table 32 by a return channel 34. The warehouse containers 20 and the commissioning containers 24 return, via the return channel 34, to the conveyor belt 10 and from there they are transferred to a despatch area or to a warehouse area.

With particular reference to the known system of Figure 1, the warehouse containers 20 have to be transferred to the commissioning area and thus made available to the picking station 30 in sufficient quantity and in predetermined sequences to fulfil a predetermined order. This means that, once the operations necessary to fulfil an order have started, only and solely those warehouse containers 20 that contain goods relating to that order should be made available to the picking table 32. If a warehouse container 20 containing goods not required to fulfil the said order were to reach the commissioning area, that container would be transferred directly onto the return channel 34 and sent back to the delivery belt 10.

As mentioned in the preamble to the present description, the known system of Figure 1 has the great disadvantage that the sequencing of the delivery of the warehouse containers 20 to the work station 30 is entrusted to the conveyor belt 10 and consequently to the control means which regulate its operation. This disadvantage is particularly marked in systems comprising a large number of picking stations and/or a large number of orders to be fulfilled.

The known system shown in Figure 2 comprises, in addition to the known system of Figure 1, a device 40 which is disposed in the region of the delivery channel 26 and is intended for arranging warehouse containers 20 in order and for storing them. In particular, the device 40 can hold and temporarily store one or more warehouse containers 20 and subsequently deliver them to the picking table 32 in accordance with a predetermined sequence. Once the goods required have been picked, the completely or partially empty warehouse containers 20 and the commissioning containers 24 are moved away from the picking table 32 by the return conveyor roller 34 and return to the conveyor belt 10.

The known system of Figure 2 overcomes a disadvantage of the known system of Figure 1, by enabling the containers delivered by the conveyor belt 10 to be arranged in accordance with a predetermined sequence and possibly stored in the commissioning area. However, the known system of Figure 2 also has many disadvantages such as, for example, the need to fulfil each order entirely with a single sequence of containers and/or to complete each individual order at any particular time before being able to start a new one.

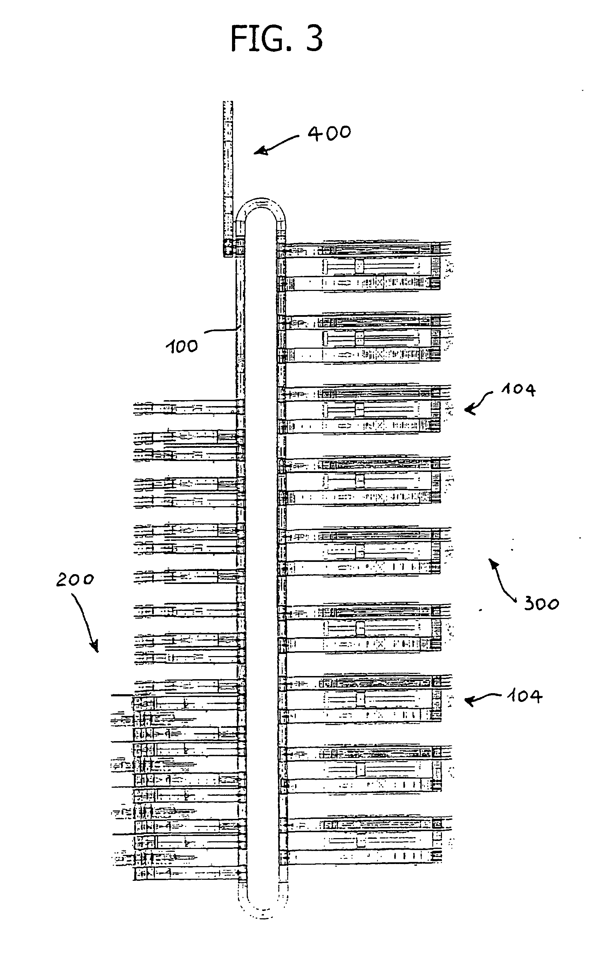

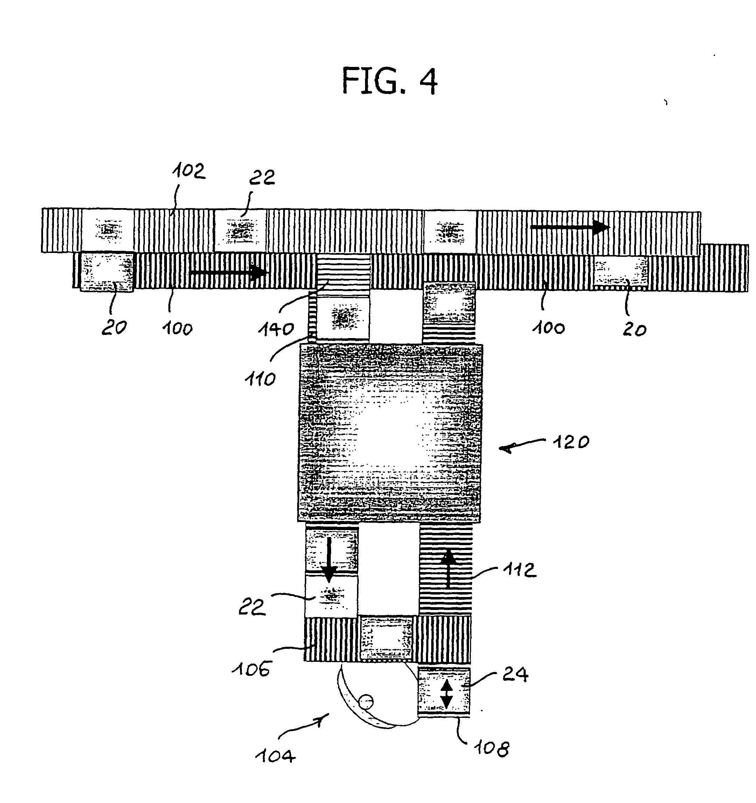

A preferred embodiment of the present invention will now be described with reference to Figures 3 and 4, in which a commissioning system comprises a warehouse 200 in which a plurality of commissioning items is kept. The commissioning system also comprises an area 300 for commissioning goods, including a plurality of commissioning work stations 104, as well as one or more operative areas such as, for example, a despatch area 400 and a production area (not shown). The commissioning system also comprises control means (not shown), generally of the electronic type, for coordinating the operation of the above-mentioned areas and optimizing the procedures for the receipt, processing and fulfilment of the orders for goods.

The commissioning area 300 comprises a plurality of commissioning work stations, for example, but in non-limiting manner, picking stations 104, in which the goods are picked from warehouse containers 20 and inserted in empty containers 22. In particular, the picking station 104 comprises (see Figure 4) a picking area or table 106 and a commissioning bay 108 connected to or in the vicinity of the table 106, and particularly suitable for housing an empty container 22 during a picking operation.

The commissioning system comprises distribution means, for example, but in non-limiting manner, conveyor means, preferably conveyor belts 100, 102, which transport containers between the warehouse 200, the commissioning area 300, and the despatch area 400.

The commissioning system also comprises delivery transport means, for example, but in non-limiting manner, conveyor belts 110, and return transport means, preferably conveyor belts 112. The delivery means 110 deliver the warehouse containers 20 from the distribution means 100 to the picking table 106. The return means 112 return the warehouse containers 20 and the commissioning containers 24 from the picking table 106 and/or from the commissioning bay 108 towards the distribution means 100. Transfer means 120 are interposed between the distribution means 100, 102 and the work station 104 for selectively transferring selected containers 20, 24 from the delivery conveyor belt 110 to the return conveyor belt 112 and/or *vice versa.*

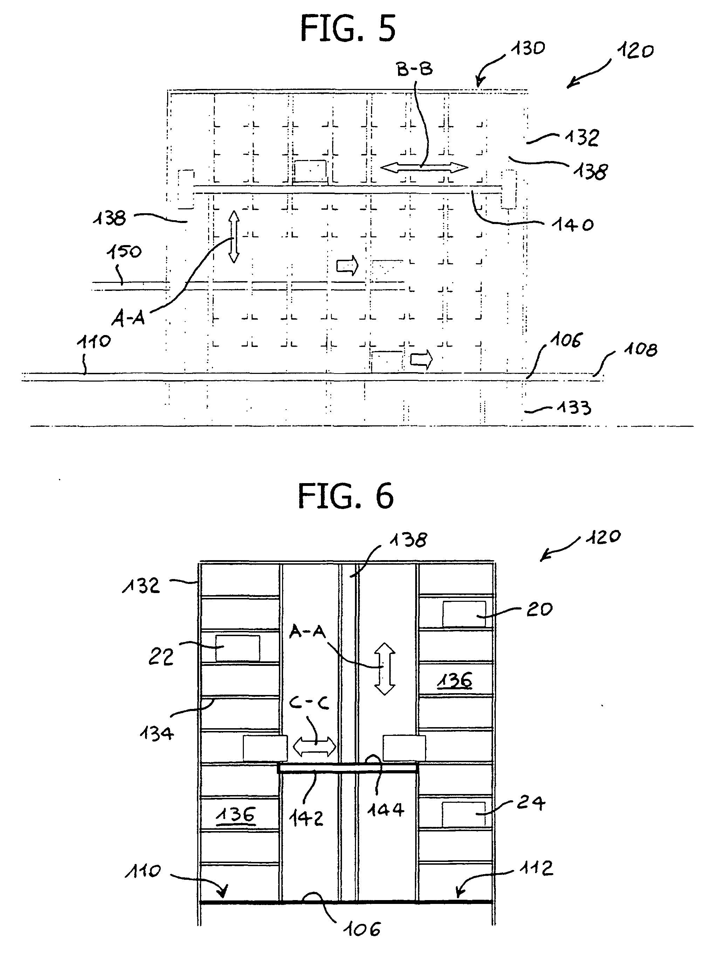

As shown best in Figures 5 and 6, the transfer means 120 preferably comprise storage means, for example, but in non-limiting manner, a frame structure 130 having a plurality of support elements, for example, uprights 132, each with a foot element 133, and preferably arranged in two pairs of parallel rows at the sides of the delivery conveyor 110 and of the return conveyor 112, respectively. The uprights 132 are connected to a plurality of transverse bars 134 so as to define one or more storage structures, for example, a plurality of housing areas 136 aligned vertically with the two conveyors 110, 112 and particularly suitable for storing a plurality of containers 20, 24.

The transfer means 120 also comprise a transfer device, for example, but in non-limiting manner, a travelling lift 142, connected movably or slidably to a guide member, for example, a longitudinal bar 140 connected slidingly to a pair of uprights 138 disposed between the two pairs of parallel rows of uprights 132. The travelling lift 142 is movable vertically in accordance with the arrow A-A and horizontally in accordance with the arrow B-B of Figure 5, in use. The travelling lift 142 comprises transfer means, for example, but in non-limiting manner, a conveyor belt 144 which can be driven in the two directions defined by the arrows C-C, in use. In the rest condition, the travelling lift 142 is positioned at the same height as the delivery and return conveyors 110 and 112 so as to be able to transfer the containers from one conveyor 110, 112 to the other.

The commissioning system preferably comprises a further transport means, preferably a conveyor belt 150, of which one end communicates with or is connected to the frame structure 130 in the vicinity of one of the areas 136 for housing containers, and the other end communicates with or is connected to the distribution means 102. The conveyor 150 is particularly suitable for transporting the empty containers 22 into the transfer means 120.

In use, upon receipt of an order to be fulfilled, in which a plurality of goods contained in a plurality of containers is required, the control means check the existence and location of the goods within the warehouse 200. Once the respective warehouse containers 20 have been identified, they are transferred onto the distribution belt 100, manually or by means of automatic devices of known type. When the warehouse containers 20 reach the vicinity of a predetermined work station 104, the delivery conveyor belt 110 transfers the containers 20 towards the picking table 106 where the goods are removed and deposited in an empty container 22. Upon completion of the picking of goods from one of the warehouse containers 20, the container is moved onto the return conveyor 112 and is then transferred towards the warehouse 200 by the distribution belt 100. When all of the goods required to fulfil the order have been picked, the commissioning container 24 is in turn moved onto the return conveyor belt 112 and is then transferred towards the despatch area 400 by the distribution belt 100.

If the commissioning system frequently receives orders in which a particular article, amongst others, is always required, a variant of the system of the present invention can perform a procedure for commissioning with storage. The warehouse containers 20 containing the most frequently used articles may be transferred to one or more predetermined work stations 104 prior to the arrival of any order. In this case, when the warehouse containers are transferred towards the picking table 106, the travelling lift 142 takes the warehouse container 20 on board by means of a rotation of the belt 144 and deposits it in one of the housing areas 136 of the transfer means 120. When an order comprising, amongst other things, one of the above-mentioned frequently used articles is to be fulfilled in the work station 104, the respective warehouse container 20 is picked up from the housing area 136 by the travelling lift 142 and is deposited on the delivery conveyor 110 which transfers it to the picking table 106. When, upon completion of the picking operation, the container of frequently used articles is transferred by the return conveyor 112 towards the distribution belt 100, the travelling lift 142 takes the container on board by a rotation of the belt 144 and deposits it in one of the housing areas 136 again. The container of frequently used articles thus remains in the commissioning area 300 until it is empty, without occupying the distribution means 100 or complicating the control logistics.

A particular advantage of this method is that a particular group of orders can be assigned to each work station on the basis of the goods that are already kept in the respective storage structures, thus saving time in the distribution of the warehouse containers 20.

When the plant for commissioning goods is in a normal operative condition, that is, in the absence of an excess of orders and/or in the absence of urgent orders, the system of the present invention can perform a preliminary or partial picking procedure. In a normal operative condition, there are, in fact, in a picking station 104, a plurality of warehouse containers 20 and at least one commissioning container 24 suitable for fulfilling one or more orders. Upon the receipt of an urgent order, the warehouse containers 20 necessary for this order can be distributed directly and immediately to this picking station 104. In the meantime, the partially picked warehouse containers and the partially filled commissioning container 24 in that station can be transferred to the transfer means 120 by the return conveyor 112, and loaded into the housing areas 136 by means of the travelling lift 142. The warehouse containers 20 for the new, urgent order are then transferred to the picking table 106, together with a new empty container 22. When the urgent order has been fulfilled, further and successive orders may be fulfilled, or it may be decided to complete the picking for the previously interrupted order by transferring the containers previously stored in the housing areas 136 to the picking table 106.

A particular advantage of this partial picking procedure is that it is possible to start picking goods for an order which requires goods that are temporarily out of stock, and to complete the order at a later time.

According to another variant of the present invention, the commissioning system can perform a procedure for the storage and consolidation of several orders. This procedure is particularly advantageous in cases in which it is necessary to fulfil orders relating to the same customer or even to fulfil orders during periods of time in which the other operational areas, for example, the despatch area, are not operative. In this case, each time a predetermined order is fulfilled, the commissioning container 24 can be kept in the housing areas 136 of the storage structures. When a predetermined number of fulfilled orders has been reached, and/or a predetermined period of time has elapsed, all of the stored commissioning containers 24 can be transferred directly, by means of the return conveyor 112, from the transfer means to the transfer belt 100 and hence to the despatch area 400.

This characteristic affords the further advantage that all of the orders relating to a predetermined customer can always be entrusted to the same work station which, amongst other things, can thus store in the housing areas 136 the warehouse containers 20 which contain the goods most frequently requested by that customer.

According to a further variant of the present invention, the system for commissioning goods can advantageously carry out a procedure for the management of empty containers. If warehouse containers 20 containing sufficient goods for a single order frequently arrive in the picking stations 104, once they are empty, these containers can be stored in the storage structures and used as empty containers 22 for subsequent orders. It is thus possible to reduce any waiting times for empty containers 22, to relieve the load on the distribution belt 102, and to facilitate control of its operation.

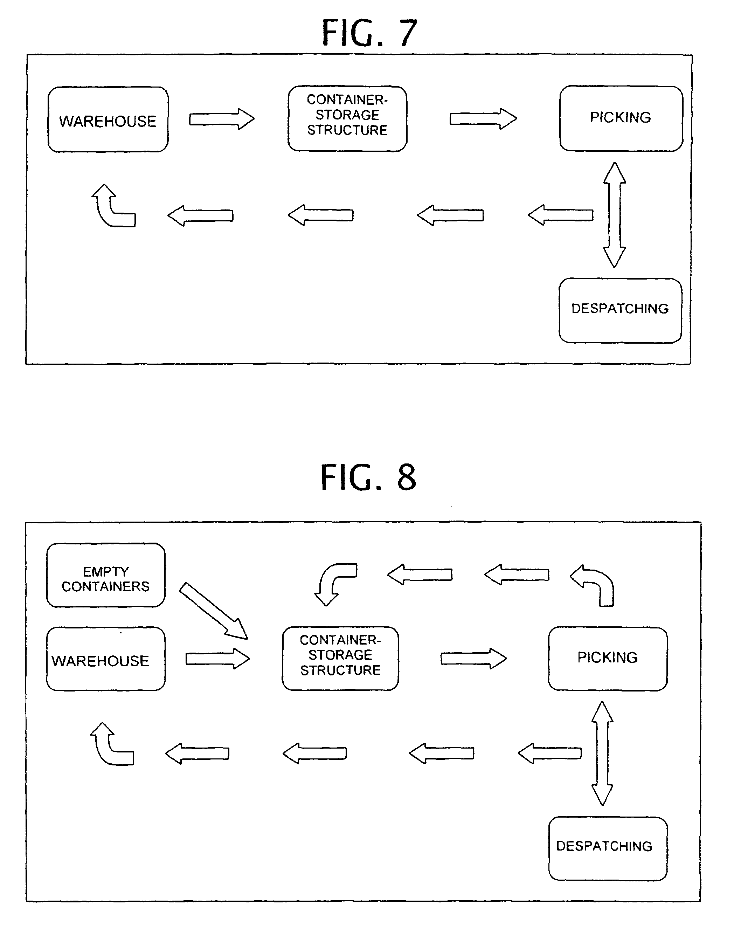

As shown in Figures 7 and 8, one of the main differences between the method of commissioning goods of the present invention and the known methods is that it is possible selectively to transfer containers 20, 22 and 24 of any type from the storage structures 120 to the picking table 106 and/or *vice versa.* This step of the method, which is achieved by the transfer of the containers from the delivery conveyor 110 to the return conveyor 112 and/or *vice versa,* enables the system of the present invention to carry out procedures of many types which are useful for facilitating the management and the fulfilment of orders for goods. For example, to avoid overcrowding of the despatch area with commissioning containers, the commissioning containers that are already ready can be held in the storage structures, and it is possible to create particular coordinated despatch sequences with several work stations by controlling the times at which the commissioning containers are discharged from the storage structures.

According to a further variant of the present invention, the system for commissioning goods can carry out a procedure for the exchange of containers between different work stations. If, for example, for any reason, it were not possible to distribute some containers of goods from the warehouse area 200 to the commissioning area 300, but the same goods were present in warehouse containers 20 stored in one of the transfer means 120 present in the commissioning area, these containers could be transferred within the commissioning area 300. In fact, the warehouse containers 20 required could be moved from the housing areas 136 onto the respective return conveyors 112 and thus transferred to the distribution belt 102. From there, the containers 20 could be distributed towards another picking station 104 and, upon completion of the picking operation, returned to the original transfer means by a similar procedure.

Naturally, the principle of the invention remaining the same, the forms of embodiment and details of construction of the present invention may be varied widely with respect to those described and illustrated, without thereby departing form the scope of the present invention.

## Claims

1. A commissioning system comprising:
- at least one commissioning work station (104),
- distribution means (100, 102) for distributing commissioning items (20),
- delivery transport means (110) for delivering the commissioning items (20) from the distribution means (100, 102) to the at least one commissioning work station (104), and
- return transport means (112) for returning the commissioning items (20) from the at least one work station (104) to the distribution means (100, 102),
**characterized in that** transfer means (120) are interposed between the distribution means (100, 102) and the at least one work station (104) in order to selectively transfer selected commissioning items from the delivery means (110) to the return means (112) and/or *vice versa.*

2. A system according to Claim 1, **characterized in that** the transfer means (120) comprises storage means for temporarily storing selected commissioning items which are being transferred from the delivery means (110) to the return means (112) and/or *vice versa*.

3. A system according to Claim 2, **characterized in that** the transfer means (120) comprises a transfer device (142) for selectively transferring commissioning items from the return means (112) to the storage means, and *vice versa,* and from the delivery means (110) to the storage means, and *vice versa*.

4. A system according to Claim 3, **characterized in that** the transfer device comprises at least one conveyor belt (144).

5. A system according to Claim 3, **characterized in that** the storage means comprise a plurality of areas (136), arranged in one or more vertically superposed horizontal rows, for housing commissioning items.

6. A system according to Claim 5, **characterized in that** the transfer device comprises a travelling lift (142).

7. A system according to Claim 6, **characterized in that** the delivery means (110) and the return means (112) comprise conveyor belts arranged along parallel paths, the travelling lift (142) being movable along at least one axis (B-B) parallel to the conveyor belts.

8. A system according to Claim 2, **characterized in that** it comprises further transport means (150) for transferring empty commissioning containers (22) from the distribution means (102) to the storage means.

9. A system according to any one of the preceding claims, **characterized in that** it further comprises a warehouse (200) for storing commissioning items, the warehouse being operatively connected to a plurality of commissioning work stations (104) by means of the distribution means (100, 102).

10. A method of operating the commissioning system according to Claim 1, **characterized in that** it comprises one or more steps selected from the group of steps comprising:
- moving one or more commissioning items from the delivery transport means (110) to the transfer means (120),
- moving one or more commissioning items from the transfer means (120) to the delivery transport means (110),
- moving one or more commissioning items from the return transport means (112) to the transfer means (120), and
- moving one or more commissioning items from the transfer means (120) to the return transport means (112).

11. A method according to Claim 10, wherein the transfer means comprises a transfer device and storage means, **characterized in that** said group of steps further comprises the steps of:
- moving one or more commissioning items from the transfer device to the storage means, and
- moving one or more commissioning items from the storage means to the transfer device.

12. A method of operating the commissioning system according to Claim 1, comprising the steps of:
- delivering a plurality of commissioning items to the work station by means of the delivery transport means,
- returning the plurality of commissioning items towards the distribution means by means of the return transport means,
**characterized in that** it further comprises the step of:
- selecting and moving one or more commissioning items from the return transport means to the transfer means.

## Patentansprüche

1. Kommissionierungssystem mit Folgendem:
- mindestens einer Kommissionierungsarbeitsstation (104),
- Verteilungsmitteln (100, 102) zum Verteilen von Kommissionierungsartikeln (20),
- einem Liefertransportmittel (110) zur Lieferung der Kommissionierungsartikel (20) von den Verteilungsmitteln (100, 102) zu der mindestens einen Kommissionierungsarbeitsstation (104) und
- einem Rücktransportmittel (112) zur Rückführung der Kommissionierungsartikel (20) von der mindestens einen Arbeitsstation (104) zu den Verteilungsmitteln (100, 102),
**dadurch gekennzeichnet, dass** zwischen den Verteilungsmitteln (100, 102) und der mindestens einen Arbeitsstation (104) ein Transfermittel (120) zwischengeschaltet ist, um ausgewählte Kommissionierungsartikel gezielt von dem Liefermittel (110) zu dem Rücktransportmittel (112) und/oder umgekehrt zu transferieren.

2. System nach Anspruch 1, **dadurch gekennzeichnet, dass** das Transfermittel (120) Lagermittel zum vorübergehenden Lagern von ausgewählten Kommissionierungsartikeln, die vom Liefermittel (110) zum Rücktransportmittel (112) und/öder umgekehrt transferiert werden, aufweist.

3. System nach Anspruch 2, **dadurch gekennzeichnet, dass** das Transfermittel (120) eine Transfervorrichtung (142) zum gezielten Transferieren von Kommissionierungsartikeln von dem Rücktransportmittel (112) zu den Lagermitteln und umgekehrt und von dem Liefermittel (110) zu den Lagermitteln und umgekehrt aufweist.

4. System nach Anspruch 3, **dadurch gekennzeichnet, dass** die Transfervorrichtung mindestens ein Förderband (144) aufweist.

5. System nach Anspruch 3, **dadurch gekennzeichnet, dass** die Lagermittel mehrere in einer oder mehreren vertikal übereinander angeordneten horizontalen Reihen angeordnete Bereiche (136) zur Unterbringung von Kommissionierungsartikeln aufweisen.

6. System nach Anspruch 5, **dadurch gekennzeichnet, dass** die Transfervorrichtung einen verfahrbaren Aufzug (142) umfasst.

7. System nach Anspruch 6, **dadurch gekennzeichnet, dass** das Liefermittel (110) und das Rücktransportmittel (112) in parallelen Bahnen angeordnete Förderbänder aufweisen, wobei der verfahrbare Aufzug (142) entlang mindestens einer parallel zu den Förderbändern verlaufenden Achse (B-B) bewegt werden kann.

8. System nach Anspruch 2, **dadurch gekennzeichnet, dass** es ein weiteres Transportmittel (150) zum Transferieren von leeren Kommissionierungsbehältern (22) vom Verteilungsmittel (102) zu den Lagermitteln aufweist.

9. System nach einem der vorhergehenden Ansprüche, **dadurch gekennzeichnet, dass** es weiterhin ein Lager (200) zum Lagern von Kommissionierungsartikeln aufweist, wobei das Lager über die Verteilungsmittel (100, 102) betriebsmäßig mit mehreren Kommissionierungsarbeitsstationen (104) verbunden ist.

10. Verfahren zum Betrieb des Kommissionierungssystems nach Anspruch 1, **dadurch gekennzeichnet, dass** es einen oder mehrere Schritte umfasst, die aus der folgenden Gruppe ausgewählt sind:
- Bewegen eines oder mehrerer Kommissionierungsartikel vom Liefertransportmittel (110) zum Transfermittel (120),
- Bewegen eines oder mehrerer Kommissionierungsartikel vom Transfermittel (120) zum Liefertransportmittel (110),
- Bewegen eines oder mehrerer Kommissionierungsartikel vom Rücktransportmittel (112) zum Transfermittel (120) und
- Bewegen eines oder mehrerer Kommissionierungsartikel vom Transfermittel (120) zum Rücktransportmittel (112).

11. Verfahren nach Anspruch 10, bei dem das Transfermittel eine Transfervorrichtung und Lagermittel aufweist, **dadurch gekennzeichnet, dass** die Gruppe von Schritten weiterhin Folgendes umfasst:
- Bewegen eines oder mehrerer Kommissionierungsartikel von der Transfervorrichtung zu den Lagermitteln und
- Bewegen eines oder mehrerer. Kommissionierungsartikel von den Lagermitteln zu der Transfervorrichtung.

12. Verfahren zum Betreiben des Kommissionierungssystems nach Anspruch 1 mit folgenden Schritten:
- Liefern von mehreren Kommissionierungsartikeln zur Arbeitsstation mit Hilfe des Liefertransportmittels,
- Rückführen der mehreren Kommissionierungsartikel zu den Verteilungsmitteln mit Hilfe des Rücktransportmittels,
**dadurch gekennzeichnet, dass** es weiterhin folgenden Schritt umfasst:
- Auswählen und Bewegen eines oder mehrerer Kommissionierungsartikel vom Rücktransportmittel zum Transfermittel.

## Revendications

1. Système de commande comprenant :
- au moins un poste de travail de commande (104),
- des moyens de distribution (100, 102) pour distribuer des articles de commande (20),
- des moyens de transport de livraison (110) pour livrer les articles de commande (20) à partir des moyens de distribution (100, 102) jusqu'au au moins un poste de travail de commande (104), et
- des moyens de transport de retour (112) pour retourner les articles de commande (20) à partir du au moins un poste de travail (104) jusqu'aux moyens de distribution (100, 102),
**caractérisé en ce que** des moyens de transfert (120) sont interposés entre les moyens de distribution (100, 102) et le au moins un poste de travail (104) afin de transférer de façon sélective des articles de commande sélectionnés à partir des moyens de livraison (110) jusqu'aux moyens de retour (112) et/ou vice versa.

2. Système selon la revendication 1, **caractérisé en ce que** les moyens de transfert (120) comprennent des moyens de stockage pour stocker temporairement des articles de commande sélectionnés qui sont transférés à partir des moyens de livraison (110) jusqu'aux moyens de retour (112) et/ou vice versa.

3. Système selon la revendication 2, **caractérisé en ce que** les moyens de transfert (120) comprennent un dispositif de transfert (142) pour transférer de façon sélective des articles de commande à partir des moyens de retour (112) jusqu'aux moyens de stockage, et vice versa, et à partir des moyens de livraison (110) jusqu'aux moyens de stockage, et vice versa.

4. Système selon la revendication 3, **caractérisé en ce que** le dispositif de transfert comprend au moins une courroie transporteuse (144).

5. Système selon la revendication 3, **caractérisé en ce que** les moyens de stockage comprennent une pluralité de zones (136), agencées en un ou plusieurs rangs horizontaux superposés verticalement, pour contenir des articles de commande.

6. Système selon la revendication 5, **caractérisé en ce que** le dispositif de transfert comprend un ascenseur mobile (142).

7. Système selon la revendication 6, **caractérisé en ce que** les moyens de livraison (110) et les moyens de retour (112) comprennent des courroies transporteuses agencées le long de voies parallèles, l'ascenseur mobile (142) étant mobile le long d'au moins un axe (B-B) parallèle aux courroies transporteuses.

8. Système selon la revendication 2, **caractérisé en ce qu'**il comprend d'autres moyens de transport (150) pour transférer des récipients de commande vides (22) à partir des moyens de distribution (102) jusqu'aux moyens de stockage.

9. Système selon l'une quelconque des revendications précédentes, **caractérisé en ce qu'**il comprend en outre un entrepôt (200) pour stocker des articles de commande, l'entrepôt étant relié de façon opérationnelle à une pluralité de postes de travail de commande (104) par l'intermédiaire des moyens de distribution (100, 102)

10. Procédé de mise en oeuvre du système de commande selon la revendication 1, **caractérisé en ce qu'**il comprend une ou plusieurs étapes sélectionnées à partir du groupe d'étapes comprenant :
- le fait de déplacer un ou plusieurs articles de commande à partir des moyens de transport de livraison (110) jusqu'aux moyens de transfert (120),
- le fait de déplacer un ou plusieurs articles de commande à partir des moyens de transfert (120) jusqu'aux moyens de transport de livraison (110),
- le fait de déplacer un ou plusieurs articles de commande à partir des moyens de transport de retour (112) jusqu'aux moyens de transfert (120), et
- le fait de déplacer un ou plusieurs articles de commande à partir des moyens de transfert (120) jusqu'aux moyens de transport de retour (112).

11. Procédé selon la revendication 10, dans lequel les moyens de transfert comprennent un dispositif de transfert et des moyens de stockage, **caractérisé en ce que** ledit groupe d'étapes comprend en outre les étapes consistant à :
déplacer un ou plusieurs articles de commande à partir du dispositif de transfert jusqu'aux moyens de stockage, et
déplacer un ou plusieurs articles de commande à partir des moyens de stockage jusqu'au dispositif de transfert.

12. Procédé de mise en oeuvre du système de commande selon la revendication 1, comprenant les étapes consistant à :
- livrer une pluralité d'articles de commande au poste de travail par l'intermédiaire des moyens de transport de livraison,
- retourner la pluralité d'articles de commande aux moyens de distribution par l'intermédiaire des moyens de transport de retour,
**caractérisé en ce qu'**il comprend en outre l'étape consistant à :
- sélectionner et déplacer un ou plusieurs articles de commande à partir des moyens de transport de retour jusqu'aux moyens de transfert.
